# EUROPÄISCHE PATENTSCHRIFT

(11) **EP 2 522 950 B1**
(45) Veröffentlichungstag und Bekanntmachung des Hinweises auf die Patenterteilung: **31.07.2013**
(21) Anmeldenummer: 12167767.8
(22) Anmeldetag: 11.05.2012
(51) Int. Cl.: G01B 5/00, G01B 11/06, G01B 21/08

(54) **Messverfahren und Vorrichtung zur Schichtdickenmessung**
Method and device for measuring layer thickness
Procédé et dispositif pour mesurer l'épaisseur de couche

(30) Priorität: 13.05.2011 DE 102011101416
(43) Veröffentlichungstag der Anmeldung: 14.11.2012
(73) Patentinhaber: MTU Aero Engines AG, 80995 München (DE)
(72) Erfinder: Hogger, Susanne, 80801 München (DE); Zierhut, Jochen, Dr., 81739 München (DE)

(56) Entgegenhaltungen:
- US-A1- 2005 137 829
- US-A1- 2009 061 075

## Beschreibung

Die Erfindung betrifft ein Verfahren zur Dickenmessung einer Beschichtung auf einem Bauteilabschnitt eines rotierenden Bauteils während eines Beschichtungsvorgangs, eine Vorrichtung zur Durchführung eines derartigen Verfahrens, ein Verfahren zur Herstellung eines Bauteils sowie eine Beschichtungsanlage.

Das Auftragen von Spritzschichten ist aufgrund des nur bedingt beeinflussbaren Partikelstrahls mit gewissen Unsicherheiten und Unregelmäßigkeiten behaftet, wodurch die Reproduzierbarkeit hinsichtlich Schichtverteilung und Maßhaltigkeit stark beschränkt bzw. nur mit entsprechend großen Toleranzen umsetzbar ist. Daher ist zur Einstellung einer geforderten Beschichtungsdicke häufig eine abtragende Nachbearbeitung wie ein Überschleifen erforderlich.

Inzwischen sind 3D-Vermessungssysteme zur Ausrichtung der Spritzdüse bekannt, mittels der die Reproduzierbarkeit der Schichtverteilung vor jedem Spritzvorgang deutlich erhöht ist und mittels der Korrekturmaßnahme hinsichtlich des Spritzwinkels möglich sind, welcher im Zusammenhang mit der Bauteilgeometrie maßgeblich die Gleichmäßigkeit des Schichtauftrags bestimmt. Voraussetzung zur optimalen Ausrichtung und Ansteuerung der Spritzdüse ist jedoch die regelmäßige Überprüfung jeder Schicht hinsichtlich ihrer Dicke während des Beschichtungsvorgangs und somit in Echtzeit.

Ein bekanntes Messverfahren zur Schichtdickenmessung und eine bekannte Messvorrichtung sind in der DE 10 2005 009 262 A1 gezeigt. Ein Sensor erfasst seinen Abstand zur Bauteiloberfläche und ein Sensor erfasst seinen Abstand zur Schichtoberfläche. Aus der Differenz der beiden Abstände wird dann die aktuelle Schichtdicke gemessen.

In der deutschen Patentanmeldung DE 10 2006 052 587 A1 der Anmelderin wird ein Messverfahren und eine Messvorrichtung mit drei Sensoren gezeigt, die auf einem ähnlichen Prinzip wie das Verfahren bzw. die Vorrichtung nach der vorgenannten DE 10 2005 009 262 A1 basieren. Dabei überwacht der dritte Sensor die Position einer der beiden Sensoren relativ zum Bauteil und erfasst zu bestimmten Zeitpunkten die Position des Bauteils. Dies ermöglicht eine Aussage darüber, in welchem Bereich der überwachte Sensor misst, so dass die Schichtverteilung genau bestimmt werden kann.

Ein Verfahren und eine Vorrichtung zur Schichtdickenmessung eines rotierenden Bauteils mit nur einem optischen Sensor sind in der WO 2006/116841 A1 gezeigt. Das Bauteil rotiert um seine Längsachse und wird über eine entlang der Längsachse verfahrene Spritzdüse beschichtet, wodurch der Schichtauftrag in spiralartigen Streifen erfolgt. Zur Erfassung der Schichtdicke ist eine Kamera vorgesehen, die die Bewegung eines die Beschichtungsoberfläche abtastenden Laserstrahls erfasst, so dass grundsätzlich über die Stufenbildung im Randbereich zwischen zwei Bändern die Schichtdicke bestimmbar ist.

Aus der US 6,832,577 B2 sind ebenfalls ein Messverfahren und eine Messvorrichtung zur Schichtdickenmessung eines rotierenden Bauteils mit nur einem optischen Sensor bekannt. Zu Beginn des Beschichtungsvorganges wird eine benötigte Pulvermenge bestimmt. Dann wird das Bauteil in einem Feld von in einer Ebene liegenden parallelen Laserstrahlen positioniert. Beim Beschichten bildet sich ein die Außenkontur des Bauteils abbildender Strahlschatten aus, dessen Breite mit steigender Schichtdicke zunimmt. Zudem wird das Bauteil durch den optischen Sensor optisch erfasst und es werden eine Vielzahl von Einzelbilder der sich ändernden Außenkontur erstellt. Nach dem Versprühen einer gewissen Pulvermenge wird der Beschichtungsvorgang unterbrochen und unter Berücksichtigung der versprühten Pulvermenge, des Strahlschattens und der Einzelbilder wird der Schichtauftrag bewertet.

Problematisch ist jedoch, dass eine Wärmeausdehnung des Bauteils beim Beschichten nicht berücksichtigt wird. Für eine genaue Schichtdickenbestimmung ist jedoch die exakte Kenntnis der Bauteilkerntemperatur wesentlich, da eine radiale Wärmeausdehnung des Bauteils häufig in der gleichen Größenordnung wie eine übliche Zielschichtdicke liegt. Zwar ist es aus der US 2009/0061075 A1 bekannt, die Temperatur mittels eines auf die Beschichtung gerichteten Pyrometers zu überwachen, jedoch bildet diese Temperatur lediglich die Oberflächentemperatur der zuletzt erzeugten Schicht ab. Diese Problematik wird verschärft, wenn das Bauteil während des

Beschichtungsvorgangs außenumfangsseitig gekühlt wird.

Aufgabe der Erfindung ist es, ein Verfahren und eine Vorrichtung zur Dickenmessung einer Beschichtung auf einem Bauteilabschnitt eines rotierenden Bauteils während eines Beschichtungsvorgangs zu schaffen, die die vorgenannten Nachteile beseitigen und eine Berücksichtigung einer Bauteilkerntemperatur ermöglichen. Darüber hinaus ist es Aufgabe der Erfindung, ein Verfahren zur Herstellung eines Bauteils und eine Beschichtungsanlage mit einer Schichtdickenmessung während eines Beschichtungsvorgangs zu schaffen.

Diese Aufgabe wird gelöst durch ein Verfahren mit den Schritten des Patentanspruchs 1, durch eine Vorrichtung mit den Merkmalen des Patentanspruchs 8 und durch eine Beschichtungsanlage mit den Merkmalen des Patentanspruchs 14.

Bei einem erfindungsgemäßen Verfahren zur Dickenmessung einer Beschichtung eines rotierenden Bauteils während eines Beschichtungsvorgangs wird eine Bauteiltemperatur an einem Bauteilflächenabschnitt rückseitig zur Beschichtungsfläche erfasst. Dann wird eine Wärmeausdehnung eines die Beschichtungsfläche und den Bauteilflächenabschnitt bildenden Bauteilabschnitts unter Berücksichtigung der erfassten Bauteiltemperatur ermittelt. Danach wird die Beschichtungsdicke unter Berücksichtigung der Wärmausdehnung des Baueilabschnitts ermittelt.

Das erfindungsgemäße Verfahren erlaubt die aktuelle und hochpräzise Messung von einzelnen Schichtdicken als auch eine Dicke einer sich aus den Schichten zusammensetzenden Beschichtung, da zur Schichtdickenmessung bzw. Beschichtungsdickenmessung die Wärmeausdehnung des zu bearbeiteten Bauteilabschnitts berücksichtigt wird. Die Ermittlung der Wärmeausdehnung erfolgt jedoch nicht auf Basis einer äußeren oberflächigen Schichttemperatur, sondern auf Basis einer in dem Bauteil als Bauteilkerntemperatur wirkenden Bauteiltemperatur. In dieser spiegeln sich sämtliche auf das Bauteil wirkenden thermischen Einwirkungen wieder, so dass auch eine oberflächigen Kühlung des Bauteils automatisch mitberücksichtigt wird.

Die Bauteiltemperatur kann kontinuierlich oder bei einem definierten Drehwinkel bzw. einem definierten Zeitpunkt, einem sogenannten Triggerpunkt erfasst werden.

Um eine besonders präzise Bestimmung der Bauteiltemperatur vornehmen zu können, wird bei einem Ausführungsbeispiel die Bauteiltemperatur an mehreren Bauteilflächenabschnitten erfasst und die Bauteilkerntemperatur dann aus den erfassten lokalen Bauteiltemperaturen gemittelt.

Bei einem Verfahren wird ein fotografisches Einzelbild zumindest eines Flächenbereichs des Bauteilabschnitts vor einem Auftrag einer Schicht der Beschichtung erstellt. Dann wird ein fotografisches Einzelbild des Flächenbereichs nach dem Schichtauftrag erstellt und die Beschichtungsdicke unter Berücksichtigung der Wärmausdehnung des Baueilabschnitts ermittelt.

Um beim Messen Bewegungsabweichungen wie Taumelbewegungen des rotierenden Bauteils ausgleichen bzw. kompensieren zu können, werden die fotografischen Einzelbilder zumindest jeweils bei einem konstanten Drehwinkel erstellt. Eine Schichtdickenbestimmung ist bereits mit einem Einzelbild pro Umdrehung möglich. Da hierdurch jedoch nur ein lokal stark begrenzter Flächenbereich einer Beschichtungsfläche des Bauteilabschnitts erfasst wird, wird es bevorzugt, wenn mehrere Einzelbilder, insbesondere 3 bis 6 Aufnahmen, pro Umdrehung bei jeweils einem konstanten Drehwinkel erstellt werden. Je mehr Einzelbilder pro Umdrehung erstellt werden, desto genauer lässt sich der Verlauf der Schichten ermitteln. Bei einem alternativen Ausführungsbeispiel wird der Bauteilabschnitt vollumfänglich fotografiert, das heißt der Bauteilabschnitt wird während einer 360°-Umdrehung des Bauteils gefilmt. Hierdurch wird der Bauteilabschnitt lückenlos erfasst, was eine sehr detaillierte Dickenanalyse der einzelnen Schichten bzw. der Beschichtung ermöglicht.

Eine Schichtdicken- bzw. Beschichtungsdickenänderung kann auf verschiedene Arten nachverfolgt werden. Bei einem Ausführungsbeispiel wird eine Punkt-Lasertriangulation durchgeführt. Hierzu wird auf den sich im Fokus der Kamera befindenden Flächenbereich des Bauteilabschnitts ein Lichtstrahl gerichtet und anhand einer Lageänderung eines sich auf dem Flächenbereich abbildenden Reflexionspunktes bzw. punktartigen Reflexionsbildes zur Kamera eine Dickenzunahme beobachtet. Bei einem anderen Ausführungsbeispiel wird eine Linien-Lasertriangulation durchgeführt, bei der ein Lichtstreifen bzw. ein aufgefächerter Lichtstrahl auf einen sich im Fokus der Kamera befindenden Flächenbereich des Bauteilabschnitts gerichtet wird und sich dann eine Reflexionslinie als Reflexionsbild abzeichnet.

Bei einem alternativen Ausführungsbeispiel wird zur Nachverfolgung einer Schichtdicken- bzw. Beschichtungsdickenänderung eine Schattenbildanalyse durchgeführt. Hierbei wird der sich im Fokus der Kamera befindenden Flächenbereich des Bauteilabschnitts rückwärtig beleuchtet und die Dickenzunahme durch eine Veränderung der sich dabei abbildenden Schattenbilder beobachtet.

Eine bevorzugte Vorrichtung zur Durchführung eines erfindungsgemäßen Verfahrens hat ein Temperaturerfassungssystem mit zumindest einem thermischen Sensor zur Bestimmung der Bauteiltemperatur an einem rückseitigen Bauteilflächenabschnitt und eine Auswerteeinrichtung zur Ermittlung der Schichtdicke unter Berücksichtigung einer Wärmeausdehnung des Bauteilabschnitts.

Der zumindest eine thermische Sensor ist bevorzugterweise dergestalt, dass er drehfest an dem Bauteil befestigbar ist und zur Übertragung der erfassten Bauteiltemperatur an die Auswerteeinrichtung mit einer Funkeinrichtung versehen ist. Die Funkeinrichtung ist insofern vorteilhaft, als dass eine Kabellösung bei einem mit dem Bauteil mitrotierendem Sensor wesentlich aufwendiger ist als eine kabellose Lösung.

Zur Präzisierung der Temperaturmessung kann eine Vielzahl von derart thermischen Funksensoren vorgesehen sein.

Zur Durchführung einer Lasertriangulation kann die Messvorrichtung eine Lichtquelle zur Erzeugung eines Reflexionspunktes oder eines Reflexionsstreifens auf dem sich im Fokus der Kamera befindenden Flächenbereich des Bauteilabschnitts aufweisen.

Zur Durchführung einer Schattenbildanalyse kann die Messvorrichtung eine Lichtquelle zur Hintergrundbeleuchtung des sich im Fokus der Kamera befindenden Flächenbereichs des Bauteilabschnitts aufweisen.

Zur regelmäßigen Datenerfassung, d.h. zur Übermittlung einer Temperatur und Erstellen einer optischen Aufnahme zu einem gegebenen Drehwinkel bzw. einer gegeben Zeit, kann ein Triggersystem vorgesehen sein. Insbesondere bzgl. der optischen Aufnahmen kann somit auf ein Kompensationssystem zum Ausgleich von Taumelbewegungen des Bauteils verzichtet werden. Alternativ kann dennoch ein Kompensationssystem vorgesehen sein.

Ein bevorzugtes Verfahren zur Herstellung eines Bauteils erfolgt unter Anwendung des erfindungsgemäßen Verfahrens und/oder unter Verwendung der erfindungsgemäßen Vorrichtung, was die Erstellung von hochpräzisen Maßbeschichtungen erlaubt. Hierdurch werden zeitintensive und kostspielige Schleiffolgen zur Einhaltung der Toleranzanforderungen eliminiert.

Eine bevorzugte Beschichtungsanlage zur Durchführung eines derartigen Herstellungsverfahrens weist zumindest eine erfindungsgemäße Messvorrichtung auf.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
Figur 1 ein erstes Ausführungsbeispiel einer erfindungsgemäßen Messvorrichtung,
Figur 2 einen Aufbau einer Beschichtung,
Figur 3 ein Lasertriangulationsbild vor einer Beschichtung eines Bauteilabschnitts,
Figur 4 ein Lasertriangulationsbild nach der Beschichtung des Bauteilabschnitts,
Figur 5 eine Temperaturmessung während der Beschichtung,
Figur 6 ein zweites Ausführungsbeispiel der erfindungsgemäßen Messvorrichtung,
Figur 7 ein Schattenbild vor einer Beschichtung eines Bauteilabschnitts, und
Figur 8 ein Schattenbild nach der Beschichtung des Bauteilabschnitts.

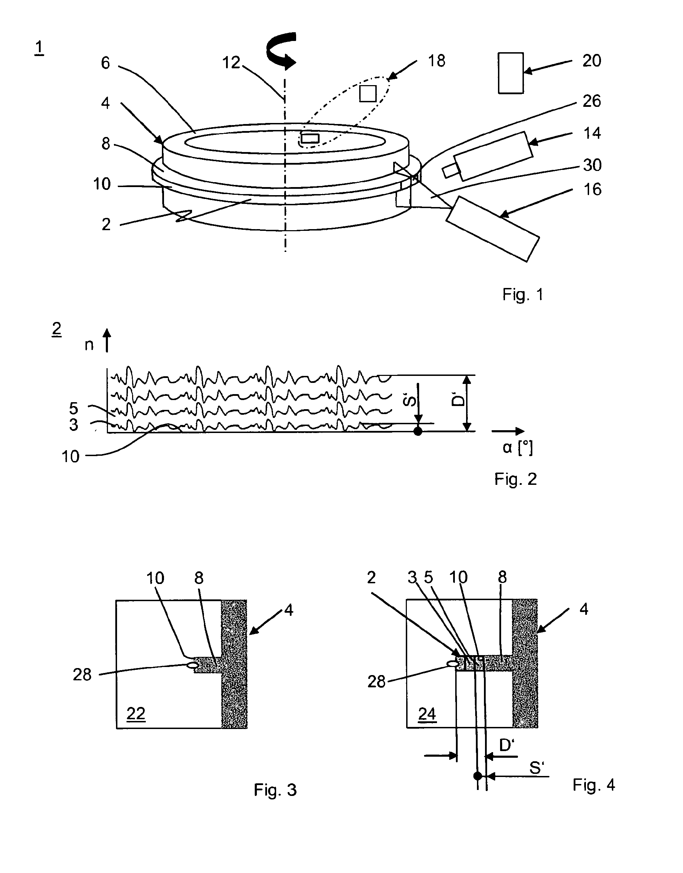

Figur 1 zeigt ein erstes Ausführungsbeispiel einer bevorzugten erfindungsgemäßen Messvorrichtung 1 zur Dickenmessung einer Beschichtung 2 bestehend aus zumindest einer Schicht 3, 5 (Fig. 2) während eines Beschichtungsvorganges eines rotationssymmetrischen Bauteils 4. Das Bauteil 4 ist in einer Dreheinrichtung einer nicht gezeigten Beschichtungsanlage eingespannt, die neben der Dreheinrichtung eine Spritzpistole mit einem einstellbaren Spritzwinkel und einem einstellbaren Spritzmitteldurchsatz aufweist. Das Bauteil 4 hat einen ringartigen Grundkörper 6 mit einem in Umfangsrichtung verlaufenden Radialbund 8, dessen Außenumfangsfläche 10 mit der Beschichtung 2 zu versehen ist. Beispielsweise ist das Bauteil 4 ein Rotorring einer Strömungsmaschine wie ein Flugzeugtriebwerk mit zumindest einem von dem Radialbund 8 gebildeten radialen Dichtsteg. Das Bauteil 4 ist in der nicht gezeigten Dreheinrichtung lose eingespannt und führt eine Rotation um seine Drehachse 12 aus.

Die Beschichtung 2 setzt sich wie stark vereinfacht in Figur 2 dargestellt aus einer Vielzahl von Schichten 3, 5 zusammen, die jeweils während einer Umdrehung auf die Außenumfangsfläche 10 des Radialbundes 8 aufgebracht werden. Die Anzahl n der Schichten 3, 5 entspricht der Anzahl der Umdrehungen. Der griechische Buchstabe α symbolisiert den Drehwinkel des Bauteils 4. Der jeweilige Schichtauftrag erfolgt über die Spritzpistole in einer Schichtdicke S und kann zwischen den Schichten 3, 5 variieren. Die Schichten 3, 5 können Unregelmäßigkeiten wie Erhebungen und Vertiefungen aufweisen, die durch entsprechende Korrekturmaßnahmen wie eine geänderte Ansteuerung der Spritzpistole während des Beschichtungsvorganges ausgeglichen werden können. Die Summe der Schichtdicken S ergibt die Beschichtungsdicke D. Bei nur einem Schichtauftrag gilt somit die Gleichung S = D.

Die Messvorrichtung 1 umfasst gemäß Figur 1 einen optischen Sensor 14 in Form einer Kamera bzw. eines Fotoapparates, ein nicht gezeigtes Triggersystem, eine Lichtquelle 16, ein Temperaturerfassungssystem 18, sowie eine Auswerteeinrichtung 20.

Die Kamera 14 ist ortsfest zum rotierenden Bauteil 4 angeordnet und dient zur Erstellung von in den Figuren 2 und 3 gezeigten fotografischen Einzelbilder 22, 24 zumindest eines Flächenbereichs 26 der Außenumfangsfläche 10.

Das Triggersystem hat einen Drehzahlmesser und/oder einen Zeitmesser und bewirkt eine Auslösung der Kamera 14 zu bestimmten sich wiederholdenden Drehwinkeln α des Bauteils 4. Hierdurch werden regelmäßig die gleichen lokalen Flächenbereiche 26 aus der gleichen Kameraperspektive fotografiert.

Die Lichtquelle 16 ist beispielsweise ein ortsfester Linienlaser und dient zur Erzeugung eines in den Figuren 3 und 4 gezeigten Reflexionspunktes 28 auf dem jeweiligen Flächenbereich 26 zur Durchführung einer Lasertriangulation. Der Reflexionspunkt bzw. die Reflexionslinie 28 entsteht durch eine Reflexion des Laserstrahls 30 an dem Flächenbereich 26. Er verändert bei jedem Schichtauftrag seine Lage relativ zur Kamera 14. Während wie in der Einzelfotografie 22 nach Figur 3 gezeigt der Reflexionspunkt 28 vor dem Beginn des Beschichtungsvorgangs unmittelbar an der unbeschichteten Außenumfangsfläche 10 abgebildet ist, wird wie in der Einzelfotografie 24 nach Figur 4 gezeigt der Reflexionspunkt 28 durch die Beschichtung 2 pro Schichtauftrag radial nach außen und somit weg von der Außenumfangfläche 10 bewegt. Am Ende des Beschichtungsvorgangs entspricht der Abstand zwischen den Reflexionspunkten 28 vor und nach dem Beschichtungsvorgang der Summe der Schichtdicken S der Schichten 3, 5 und somit einer Beschichtungsdicke D. Da in den Einzelfotografien die Schichtdicke S und die Beschichtungsdicke D in Pixel angegeben und somit als S', D' ausgegeben werden, sind diese zur Ausgabe in einer metrischen Maßeinheit entsprechend den Beziehungen S' = S * k und D' = D/* k mit k als ein Maßstabskorrekturfaktur k umzurechnen.

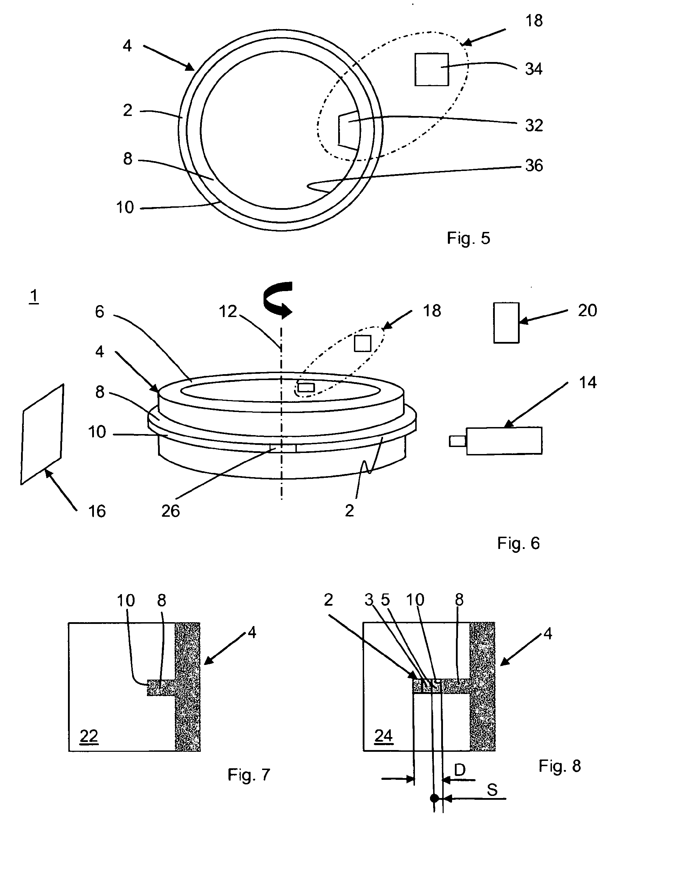

Das Temperaturmesssystem 18 dient zur Ermittlung einer Bauteilkerntemperatur. Wie in der stark vereinfachten Figur 5 gezeigt umfasst es einen thermischen Sensor 32 mit einer Funkeinrichtung und eine Empfangseinheit 34. Der sogenannte Funksensor 32 wird rückseitig in unmittelbarer Nähe zur außenumfangsseitigen Beschichtung 2 an einem innenumfangsseitigen Bauteilflächenabschnitt 36 des Bauteils 4 drehfest positioniert. Beispielsweise ist er formschlüssig in eine entsprechende Innenumfangsnut oder drgl. eingesetzt. Er befindet sich in unmittelbarer Nähe der Beschichtung 2 und überträgt seine Messdaten via Funk an die außenumfangs- bzw. beschichtungsseitig angeordnete, mit der Auswerteeinrichtung 20 kommunizierende Empfangseinheit 34.

Die Auswerteeinrichtung 20 ermittelt aus den Einzelbildern 22, 24 und der Bauteilkerntemperatur die jeweilige Schichtdicke S sowie die aktuelle Beschichtungsdicke ΔD, so dass in Zusammenwirken mit der Maschinensteuerung der Beschichtungsanlage bei nicht tolerierbaren Abweichungen Korrekturmaßnahmen wie eine geänderte Ansteuerung der Spritzpistole durchgeführt werden können.

Figur 6 zeigt ein zweites bevorzugtes Ausführungsbeispiel einer erfindungsgemäßen Messvorrichtung 1 zur Dickenmessung einer Beschichtung 2 aus zumindest einer Schicht während eines Beschichtungsvorganges eines Radialbundes 8 eines rotationssymmetrischen Bauteils 4.

Die Messvorrichtung 1 umfasst einen optischen Sensor 14 in Form einer Kamera bzw. eines Fotoapparates, ein nicht gezeigtes Triggersystem, eine Lichtquelle 16, ein Temperaturerfassungssystem 18, sowie eine Auswerteeinrichtung 20. Die Kamera 14, das Triggersystem, das Temperaturmesssystem 18 sowie die Auswerteinrichtung 20 nach dem zweiten Ausführungsbeispiel sind gegenüber dem ersten Ausführungsbeispiel unverändert. Im Unterschied zum ersten Ausführungsbeispiel nach Figur 1 erfolgt bei dem zweiten Ausführungsbeispiel jedoch keine Lasertriangulation, sondern es wird eine Schattenbildanalyse zur Erfassung einer jeweiligen Schichtdicke S sowie zur Einstellung der geforderten Beschichtungsdicke D durchgeführt. Die Berücksichtigung eines Maßstabskorrekturfaktors k ist bei der Schattenbildanalyse nicht notwendig.

Hierzu ist die Kamera 14 tangential auf den zu beschichtenden bzw. beschichtenden Flächenbereich 26 des Bauteils 4 gerichtet, der rückwärtig durch die als Hintergrundbeleuchtung wirkende Lichtquelle 16 beleuchtet wird. Wie in den Einzelbildern 22, 24 in den Figuren 7 und 8 vor und nach einem Beschichtungsvorgang gezeigt, wird bei der Schattenbildanalyse der rückwärtig beleuchtete Abschnitt des Radialbundes 8 als Schatten dargestellt. Ebenso wird jede Schicht 3, 5 und somit die Beschichtung 2 als Schatten abgebildet. Eine Veränderung der jeweiligen Schichtdicke S bzw. Beschichtungsdicke D wird jeweils über einen Vergleich der jeweiligen Schattenbilder bzw. Einzelbilder 22, 24 beobachtet, wobei am Ende des Beschichtungsvorgangs die Beschichtung 2 die Soll-Dicke D aufweist.

Im Folgenden wird ein Ausführungsbeispiel eines erfindungsgemäßen Messverfahrens zur Dickenmessung einer Beschichtung 2 bestehend aus zumindest einer Schicht während eines Beschichtungsvorganges einer Außenumfangsfläche 10 eines Radialbundes 8 eines rotationssymmetrischen Bauteils 4 erläutert. Das Bauteil 4 wird in die Dreheinrichtung der Spritzanlage eingespannt und in Rotation versetzt. Die Kamera 14 sowie die Lichtquelle 16 werden angesteuert und es werden 6 Einzelbilder 22 von der unbeschichteten Außenumfangsfläche 10 bei bestimmten Drehwinkeln α erstellt. Nach einer Umdrehung des Bauteils 4 wird die Spritzpistole angesteuert und es wird eine Schicht 3 auf die Außenumfangsfläche 10 aufgetragen. Zeitgleich zum Auftragen der Schicht 3 werden 6 Einzelbilder 24 bei den vorhergehenden Drehwinkeln α erstellt. Zudem wird über den zumindest einen am Bauteil 4 innenumfangsseitig befestigten Funksensor 32 die Bauteilkerntemperatur erfasst und diese via Funk an die außenliegende Empfangseinheit 34 gesendet, die dann auf Basis der erfassten Bauteilkerntemperatur die Wärmeausdehnung des Radialbundes 8 ermittelt. Dann werden die Einzelbilder 22, 24 (Reflexionsbilder oder Schattenbilder) vor dem jeweiligem Schichtauftrag mit den Einzelbildern nach jedem Schichtauftrag verglichen und unter Berücksichtigung der Wärmeausdehnung die aktuelle Beschichtungsdicke ΔD bzw. die Schichtdicke S ermittelt. Die Schritte: Erstellung Einzelbilder, Erfassung Bauteiltemperatur, Ermittlung Wärmeausdehnung des zu beschichtenden Radialbundes 8 und Ermittlung der Beschichtungsdicke D bzw. Schichtdicke S auf Basis eines Vergleichs der Einzelbilder 22, 24 und unter Berücksichtigung der Wärmausdehnung wird solange wiederholt, bis sämtliche Schichten 3, 5 zur Erstellung der Beschichtung 2 aufgetragen sind bzw. bis die Beschichtung 2 ihre geforderte Dicke D aufweist.

Bei einem erfindungsgemäßen Beschichtungsverfahren wird eine Dickenmessung der Beschichtung 2 bzw. ihrer Schichten 3, 5 unter Anwendung des erfindungsgemäßen Messverfahrens durchgeführt. Wenn notwendig, werden basierend auf den Messergebnissen Korrekturmaßnahmen wie eine Spritzwinkeländerung oder eine Änderung des Spritzmitteldurchsatzes während des Beschichtungsvorganges bzw. zwischen dem Auftrag von zwei Schichten 3, 5 und somit in Echtzeit durchgeführt.

Offenbart ist ein Verfahren zur Dickenmessung einer Beschichtung auf einem Bauteilabschnitt eines rotierenden Bauteils, wobei unter Erfassung einer Bauteilkerntemperatur eine Wärmeausdehnung des Bauteilabschnitts ermittelt und eine aktuelle Beschichtungsdicke erstellt wird, eine Vorrichtung zur Durchführung eines derartigen Verfahrens mit einem Temperaturerfassungssystem und einer Auswerteinrichtung, sowie ein Herstellungsverfahren und eine Beschichtungsanlage.

### Bezugszeichenliste

- 1: Messvorrichtung
- 2: Beschichtung
- 3: Schicht
- 4: Bauteil
- 5: Schicht
- 6: Grundkörper
- 8: Radialbund
- 10: Außenumfangsfläche
- 12: Drehachse
- 14: Kamera
- 16: Lichtquelle
- 18: Temperaturerfassungssystem
- 20: Auswerteeinrichtung
- 22: Einzelbild
- 24: Einzelbild
- 26: Flächenbereich
- 28: Reflexionspunkt
- 30: Laserstrahl
- 32: Funksensor
- 34: Empfangseinheit
- 36: Bauteilflächenabschnitt
- D: Beschichtungsdicke
- S: Schichtdicke
- α: Drehwinkel

## Patentansprüche

1. Verfahren zur Dickenmessung einer Beschichtung (2) eines rotierenden Bauteils (4) während eines Beschichtungsvorgangs, mit den Schritten:
- Erfassen einer Bauteiltemperatur an einem Bauteilflächenabschnitt (36) rückseitig zur Beschichtungsfläche (10),
- Ermitteln einer Wärmeausdehnung eines die Beschichtungsfläche (10) und den Bauteilflächenabschnitt (36) bildenden Bauteilabschnitts (8) unter Berücksichtigung der erfassten Bauteiltemperatur, und
- Ermitteln der Beschichtungsdicke (D) unter Berücksichtigung der Wärmausdehnung des Baueilabschnitts (8).

2. Verfahren nach Anspruch 1, wobei die Bauteiltemperatur kontinuierlich oder bei einem definierten Drehwinkel (α) erfasst wird.

3. Verfahren nach Anspruch 1 oder 2, wobei an mehreren Bauteilflächenabschnitten (36) jeweils eine Bauteiltemperatur ermittelt und aus dieser eine Baueiltemperatur gemittelt wird.

4. Verfahren nach Anspruch 1, 2 oder 3, mit den Schritten:
- Erstellen eines fotografischen Einzelbildes (22) zumindest eines Flächenbereichs (26) des Bauteilabschnitts (8) vor einem Auftragen einer Schicht (3, 5) der Beschichtung (2),
- Erstellen eines fotografischen Einzelbildes (24) des Flächenbereichs (26) nach dem Schichtauftrag,
- Ermitteln der Beschichtungsdicke (D) auf Basis eines Vergleichs der Einzelbilder (22, 24) und unter Berücksichtigung der Wärmeausdehnung des Bauteilabschnitts (8).

5. Verfahren nach Anspruch 4, wobei eine Vielzahl von fotografischen Einzelbildern (22, 24) bei definierten Drehwinkeln (α) erstellt werden.

6. Verfahren nach Anspruch 4 oder 5, wobei auf dem Flächenbereich (26) ein Lichtstrahl gerichtet wird und anhand eines sich auf dem Flächenbereich (26) abbildenden Reflexionsbildes (28) eine Schichtdickenzunahme (ΔD) beobachtet wird.

7. Verfahren nach Anspruch 4 oder 5, wobei der Flächenbereich (26) als Schattenbild abgebildet wird.

8. Vorrichtung (1) zur Durchführung des Verfahrens zur Dickenmessung einer Beschichtung (2) auf einem Bauteilabschnitt (8) eines rotierenden Bauteils (4) während eines Beschichtungsvorgangs nach einem der vorhergehenden Ansprüche, mit einem Temperaturerfassungssystem (18) mit zumindest einem thermischen Sensor (32) zur Bestimmung einer Bauteiltemperatur an einem zur Beschichtungsfläche (10) rückseitigen Bauteilflächenabschnitt (36) des Bauteilabschnitts (8), und mit einer Auswerteeinrichtung (20) zur Ermittlung der Beschichtungsdicke (D) unter Berücksichtigung einer Wärmausdehnung des Bauteilabschnitts (8).

9. Vorrichtung nach Anspruch 8, wobei der zumindest eine thermische Sensor (32) drehfest an dem Bauteil (4) befestigbar ist und eine Funkeinrichtung zur Übertragung der erfassten Temperatur an eine Empfangseinheit (34) aufweist.

10. Vorrichtung nach Anspruch 9, wobei das Temperaturerfassungssystem (18) eine Vielzahl von thermischen Funksensoren (32) aufweist.

11. Vorrichtung nach einem der Ansprüche 8, 9 oder 10, wobei eine Lichtquelle (16) zur Erzeugung eines Reflexionsbildes (28) auf dem Flächenbereich (26) vorgesehen ist.

12. Vorrichtung nach einem der Ansprüche 8, 9 oder 10, wobei eine Lichtquelle (16) zur Erzeugung eines Schattenbildes des Flächenbereichs (26) vorgesehen ist.

13. Vorrichtung nach einem der Ansprüche 8 bis 12, wobei ein Triggersystem zur regelmäßigen Datenerfassung vorgesehen ist.

14. Beschichtungsanlage mit einer Vorrichtung (1) nach einem der Ansprüche 8 bis 13.

## Claims

1. Method for measuring the thickness of a coating (2) of a rotating component (4) during a coating process, having the steps:
- detecting a component temperature at a component-surface section (36) on the rear side with respect to the coating surface (10),
- determining a thermal expansion of a component section (8), constituting the coating surface (10) and the component-surface section (36), in consideration of the component temperature that is detected, and
- determining the coating thickness (D) in consideration of the thermal expansion of the component section (8).

2. Method according to claim 1, wherein the component temperature is detected continuously or at a defined angle of rotation (α).

3. Method according to claim 1 or 2, wherein a respective component temperature is determined at a plurality of component-surface sections (36) and a component temperature is averaged from this.

4. Method according to claim 1, 2 or 3, having the steps:
- preparing a single photographic image (22) at least of a surface region (26) of the component section (8) prior to application of a layer (3, 5) of the coating (2),
- preparing a single photographic image (24) of the surface region (26) after the layer-application,
- determining the layer thickness (D) on the basis of a comparison of the single images (22, 24) and in consideration of the thermal expansion of the component section (8).

5. Method according to claim 4, wherein a plurality of single photographic images (22, 24) are prepared at defined angles of rotation (α).

6. Method according to claim 4 or 5, wherein a light beam is directed at the surface region (26) and an increase in layer thickness (ΔD) is observed with the aid of a reflection image (28) imaged on the surface region (26).

7. Method according to claim 4 or 5, wherein the surface region (26) is imaged as a shadow image.

8. A device (1) for carrying out the method for measuring the thickness of a coating (2) on a component section (8) of a rotating component (4) during a coating process according to one of the preceding claims, having a temperature-detection system (18) having at least one thermal sensor (32) for determining a component temperature at a component-surface section (36) of the component section (8) on the rear side with respect to the coating surface (10) and having an evaluating device (20) for determining the coating thickness (D) in consideration of a thermal expansion of the component section (8).

9. A device according to claim 8, wherein the at least one thermal sensor (32) can be secured on the component (4) in a rotationally secure manner and has a wireless facility for transmitting the detected temperature to a receiving unit (34).

10. A device according to claim 9, wherein the temperature-detection system (18) has a plurality of thermal wireless sensors (32).

11. A device according to one of claims 8, 9 or 10, wherein a light source (16) is provided for generating a reflection image (28) on the surface region (26).

12. A device according to one of claims 8, 9 or 10, wherein a light source (16) is provided for generating a shadow image of the surface region (26).

13. A device according to one of claims 8 to 12, wherein a trigger system is provided for regular data-acquisition.

14. A coating system having a device (1) according to one of claims 8 to 13.

## Revendications

1. Procédé pour mesurer l'épaisseur d'un revêtement (2) d'une pièce en rotation (4) pendant une opération de revêtement, comportant les étapes suivantes :
- Détection de la température d'une pièce sur un tronçon de surface (36) de celle-ci à l'arrière de la surface à revêtir (10),
- Détermination d'une dilation thermique d'un tronçon de pièce (8) formant la surface à revêtir (10) et le tronçon de surface (36) de la pièce, compte tenu de la température de la pièce détectée, et
- Détermination de l'épaisseur de revêtement (D) compte tenu de la dilatation thermique du tronçon de pièce (8).

2. Procédé selon la revendication 1, dans lequel la température de la pièce est détectée en continu ou avec un angle de rotation (α) défini.

3. Procédé selon la revendication 1 ou la revendication 2, dans lequel on détermine des températures de pièce respectives pour chacun d'une pluralité de tronçons de surface (36) de la pièce et on calcule, à partir de celles-ci, une température moyenne de la pièce.

4. Procédé selon la revendication 1, 2 ou 3 comportant les étapes suivantes :
- Réalisation d'un cliché photographique individuel (22) d'au moins une zone de surface (26) du tronçon de pièce (8) avant l'application d'une couche (3, 5) du revêtement (2),
- Réalisation d'un cliché photographique individuel (24) de la zone de surface (26) après l'application d'une couche,
- Détermination de l'épaisseur (D) du revêtement sur la base d'une comparaison des clichés individuels (22, 24) et compte tenu de la dilatation thermique du tronçon de pièce (8).

5. Procédé selon la revendication 4, dans lequel on réalise une pluralité de clichés photographiques individuels (22, 24) avec des angles de rotation définis (α).

6. Procédé selon la revendication 4 ou 5, dans lequel on dirige un faisceau lumineux sur la zone de surface (26) et on observe une augmentation (ΔD) de l'épaisseur de couche à l'aide d'une image de réflexion (28) se reproduisant sur la zone de surface (26).

7. Procédé selon la revendication 4 ou la revendication 5, dans lequel la zone de surface (26) est représentée sous forme de silhouette.

8. Dispositif (1) pour réaliser le procédé de mesure de l'épaisseur d'un revêtement (2) d'une pièce en rotation (4) sur un tronçon de pièce (8) pendant une opération de revêtement selon l'une quelconque des revendications précédentes, avec un système de détection de la température (18) comportant au moins un capteur thermique (32) pour déterminer la température d'une pièce sur un tronçon de surface (36) du tronçon de pièce (8) à l'arrière de la surface à revêtir (10) et un dispositif d'analyse (20) pour déterminer l'épaisseur (D) du revêtement compte tenu d'une dilatation thermique du tronçon de pièce (8).

9. Dispositif selon la revendication 8, dans lequel au moins un capteur thermique (32) peut être fixé sans pouvoir tourner sur la pièce (4) et présente un dispositif radio destiné à transmettre la température détectée à une unité de réception (34).

10. Dispositif selon la revendication 9, dans lequel le système de détection de la température (18) présente une pluralité de capteurs thermiques radio (32).

11. Dispositif selon l'une quelconque des revendications 8, 9 ou 10, dans lequel la source lumineuse (16) est destinée à produire une image de réflexion (28) sur la zone de surface (26).

12. Dispositif selon l'une quelconque des revendications 8, 9 ou 10, dans lequel une source lumineuse (16) est destinée à produire une silhouette de la zone de surface (26).

13. Dispositif selon l'une quelconque des revendications 8 à 12, dans lequel un système de déclenchement permet la saisie régulière de données.

14. Installation d'application de revêtement comportant un dispositif (1) selon l'une quelconque des revendications 8 à 13.
